# EUROPEAN PATENT APPLICATION

(11) **EP 2 178 057 A1**
(43) Date of publication of application: **21.04.2010**
(21) Application number: 07790331.8
(22) Date of filing: 07.08.2007
(51) Int. Cl.: G08C 17/00, G06K 19/00, G06K 19/07, H04B 1/59, H04B 5/02

(54) **RESPONSE WIRELESS DEVICE AND ITS WIRELESS COMMUNICATION METHOD**

(71) Applicant: Fujitsu Limited, Kawasaki-shi, Kanagawa 211-8588 (JP)
(72) Inventor: YOKOO, Kaoru, Kawasaki-shi Kanagawa 211-8588 (JP)
(74) Representative: Stebbing, Timothy Charles
(86) International application number: PCT/JP2007/000843
(87) International publication number: WO 2009/019735

(57) **Abstract**

A response wireless device and a communications method for the response wireless device are provided by which power consumption can be decreased and the state of a processing unit can be recognized while a power source unit is in an off state so as to facilitate maintenance. Memory 7 stores data. A processing unit 5 collects various data and stores the data in the memory. A power source unit 6 provides electric power needed by the processing unit for collecting the data and storing the data in the memory. A receiver unit 4 conducts reception or transmission of radio signals. The receiver unit controls the power source unit so as to make it supply electric power to the processing unit when a received radio signal includes a prescribed first signal, and when a received radio signal includes a prescribed second signal, the receiver unit reads the data stored in the memory so as to transmit it as a radio signal.

## Description

### Technical Field

The embodiments discussed herein are related to a response wireless device for transmitting information on the environment of the device itself to the external environment by means of wireless communications and to a wireless communications method for the response wireless device, and particularly to a response wireless device and a wireless communications method for the response wireless device that are capable not only of decreasing, as quickly as possible, power consumption of the response wireless device itself, but also of transmitting a response of desired environmental information even in a power-off state.

### Background Art

Conventionally, a communications system having response wireless devices and query wireless devices has been known. In this type of communications system, a response wireless device transmits, to a query wireless device, information on the environment of the response wireless device itself in response to a query transmitted from the query wireless device.

As examples of this type of communications system, there are a response wireless device, which is called a tag, and a query wireless device, which is called a reader/writer, for communicating with a response wireless device. A tag has an antenna, a circuit, and memory, but does not have a power source in itself, and accordingly it utilizes resonantly-induced power generated together with communication waves from the reader/writer so that it can activate its circuit and transmit, to the reader/writer, IDs in the memory and data that has been updated.

A response wireless device such as a wiretap device, which is an example of a response wireless device used for a communications system, has a power source in itself, and converts acoustic waves obtained through a microphone into electric signals so as to transmit them to the external environment, regardless of whether or not there is a query wireless device around it.

As another example of this type of response wireless device, there is a response wireless device that has a sensor instead of a microphone to detect particular information so as to convert into electric signals particular environmental information obtained by the sensor and to transmit the information to the external environment.

There are two types of the above described response wireless devices; one is a type that transmits electric signals of particular environmental information to the external environment continuously, and the other is a type that transmits such electric signals in response to instructions from a query wireless device.
Response wireless devices using sensors as described above are often fixed at important areas that need maintenance in facilities such as large plants or the like. Also, some response wireless devices are embedded in pillars of expressways or the like, or in walls of large buildings or the like. The service life of power sources included in this type of response wireless device is two or three years in most cases.

As a conventional technique for the above described response wireless devices, Patent Document 1 discloses a technique of reducing standby power consumed for waiting for query waves from a query wireless device by activating a power source control circuit to turn on the power of the device by using induced power supplied from radio waves of radio signals transmitted from the query wireless device so that power consumption in the power source included in the response wireless device can be reduced.

As another conventional technique, Patent Document 2 discloses a method of reducing standby power in which the power of a device is turned on to enable communications with a query wireless device only when an activation command received from the query wireless device and a reference command stored in memory in the device correspond to each other.

However, some problems remain unsolved even though Patent Documents 1 and 2 above provide effective methods by which power consumed in a standby state of a response wireless device can be reduced.
For example, the technique of Patent Document 1 simply utilizes resonantly induced power of radio waves, and thus a probability of malfunction in a response wireless device is high when there is a source of radio waves that can induce a high electric power across a wide band, as represented by, for example, a microwave oven, making this method inappropriate for cases that require high reliability of a response wireless device.

The technique of Patent Document 2 activates a power source when the activation command and the reference command correspond, and this configuration achieves an anti-interference ability higher than the technique of Patent Document 1. However, when, for example, a query wireless device attempts to recognize the remaining power and the like in the battery in a response wireless device, it has to transmit an activation command in order to turn on the response wireless device.

However, when a response wireless device does not respond to an activation command, it is impossible to know whether the cause of not responding is a circuit failure or running out of the power unless the response wireless device is checked directly.

The need to check response wireless devices directly has been a serious problem in view of ease of maintenance operations, particularly when they are assumed to be embedded in pillars, building walls, or the like.
Patent Document 1: Japanese Laid-open Patent Publication No. 2006-229558
Patent Document 2: Japanese Laid-open Patent Publication No. 2005-80205

### Disclosure of Invention

It is an object of the present invention to provide a response wireless device and a wireless communications method for the response wireless device that can minimize the power consumption in the power source of the response wireless device and can also make a response including desired environmental information even when the power source is in an off state.

A response wireless device according to the present invention includes: memory for storing data, a processing unit for collecting various data and storing the data in the memory, a power source unit for supplying electric power needed by the processing unit for collecting the data and storing the data in the memory, and a receiver unit for receiving at least a radio signal.

One aspect of the present invention is that the receiver unit controls the power source unit so as to make the power source unit supply the electric power to the processing unit when a received radio signal includes a first signal.
It is also possible for the device according to the present invention to employ a configuration in which the receiver unit generates a trigger signal for activating the power source unit of the processing unit.

It is also possible for the device according to the present invention to employ a configuration in which the receiver unit is a transceiver unit that can also transmit a radio signal, and in which the receiver unit reads data stored in the memory to transmit the data as a radio signal when the received radio signal includes a second signal.

It is also possible for the device according to the present invention to employ a configuration in which the processing unit is supplied with electric power from the power source unit activated by the receiver unit and stops by itself the supply of the electric power from the power source unit after performing its operation.

It is also possible for the device according to the present invention to employ a configuration in which the receiver unit and the memory in the response wireless device constitute a passive-type wireless tag (RFID (Radio Frequency Identification) tag).

In the device according to the present invention, the processing unit may be a computer.
In the device according to the present invention, the data may represent a state of the processing unit.

In the device according to the present invention, the processing unit may include a sensor for measuring the external environment.
In the device according to the present invention, the data may represent a state of the sensor.

In the device according to the present invention, the processing unit may perform communications using radio signals.
In this configuration, a first radio transmission path used by the receiver unit and a second radio transmission path used by the processing unit may be the same frequency channel, and may conduct reception or transmission using a TDD (Time Division Duplex) method.

Alternatively, the first radio transmission path used by the receiver unit and the second radio transmission path used by the processing unit may use a TDD method for conducting reception or transmission in different frequency channels.

Alternatively, the first radio transmission path used by the receiver unit and the second radio transmission path used by the processing unit may use an FDD (Frequency Division Duplex) method for conducting reception or transmission in different frequency channels at the same time.

It is also possible for the device according to the present invention to employ a configuration in which the receiver unit includes an antenna for conducting reception or transmission of the first radio signal, and the antenna also receives or transmits the second radio signal for the processing unit.

It is also possible for the device according to the present invention to employ a configuration in which the receiver unit includes a power collection unit for collecting energy around the power collection unit so as to convert the energy into electric power, and the receiver unit is driven by the collected electric power.

In the above configuration, the power collection unit may convert, into electric energy, any forms of energy around the power collection unit, such as vibration energy, heat energy, energy of sunlight, microwave energy, and the like.

### Brief Description of Drawings

Fig. 1 illustrates an exemplary configuration of a wireless communications system that implements the present invention;
Fig. 2 illustrates an example of an internal configuration of a receiver unit 4 and memory 7 in the wireless communications system illustrated in Fig. 1;
Fig. 3 is a flowchart illustrating steps to be executed by the response wireless device illustrated in Fig. 1;
Fig. 4 illustrates a second example of a configuration of a response wireless device that implements the present invention;
Fig. 5 illustrates a third example of a configuration of a response wireless device that implements the present invention;
Fig. 6 is a flowchart illustrating steps to be executed by the response wireless device illustrated in Fig. 5;
Fig. 7 illustrates a fourth example of a configuration of a response wireless device that implements the present invention;
Fig. 8 is a flowchart illustrating steps to be executed by the response wireless device illustrated in Fig. 7;
Fig. 9 illustrates a fifth example of a configuration of a response wireless device that implements the present invention;
Fig. 10 is a flowchart illustrating steps to be executed by the response wireless device illustrated in Fig. 9;
Fig. 11 illustrates an example of a wireless communications method for the response wireless device illustrated in Fig. 9;
Fig. 12 illustrates a sixth example of a configuration of a response wireless device that implements the present invention;
Fig. 13 illustrates a seventh example of a configuration of a response wireless device that implements the present invention; and
Fig. 14 is a flowchart illustrating steps to be executed by the response wireless device illustrated in Fig. 13.

### Symbols

- 1: QUERY WIRELESS DEVICE
- 2: RESPONSE WIRELESS DEVICE
- 3: ANTENNA
- 4: RECEIVER UNIT
- 5: PROCESSING UNIT
- 6: POWER SOURCE UNIT
- 7: MEMORY
- 8: RADIO SIGNAL
- 9: TRIGGER SIGNAL
- 10: DATA
- 11: ELECTRIC POWER GENERATION UNIT
- 12: RECTIFYING UNIT
- 13: POWER SOURCE UNIT
- 14: RECEIVER UNIT AND DATA DEMODULATION UNIT
- 15: PROTOCOL CONTROL UNIT (LOGIC UNIT)
- 16: CLOCK GENERATION UNIT
- 17: NON-VOLATILE MEMORY
- 18: TRANSMITTER UNIT AND DATA MODULATION UNIT
- 19: RFID TAG
- 20: STATE OF PROCESSING UNIT
- 21: SENSOR
- 22: SENSOR DATA
- 23: ANTENNA
- 24: RECEIVER UNIT
- 25: RADIO SIGNAL
- 26: POWER COLLECTION UNIT
- 27: RECEIVER UNIT

### Best Mode of Carrying Out the present invention

Hereinafter, embodiments of the present invention will be explained by referring to the drawings.

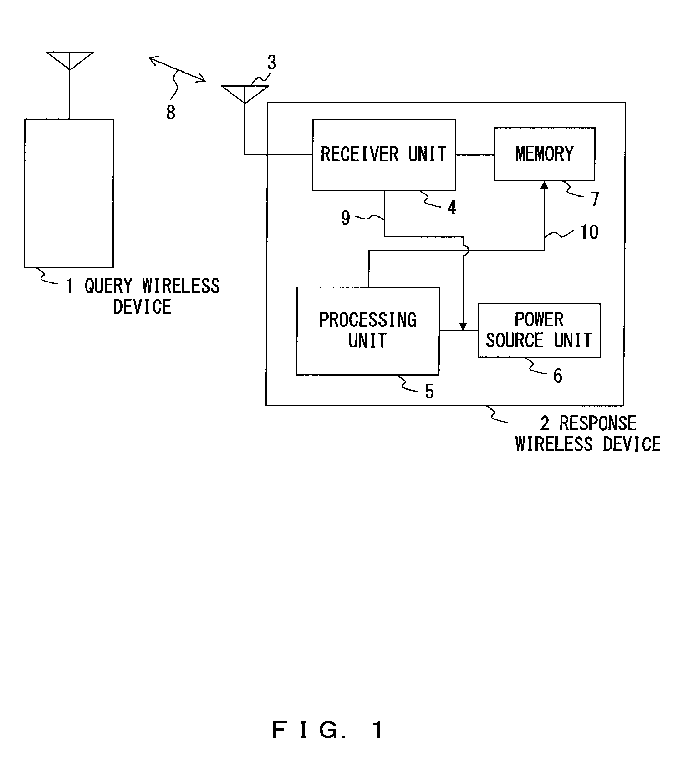

Fig. 1 illustrates a configuration of a wireless communications system that implements the present invention, and includes a first example of a configuration of a response wireless device that implements the present invention.

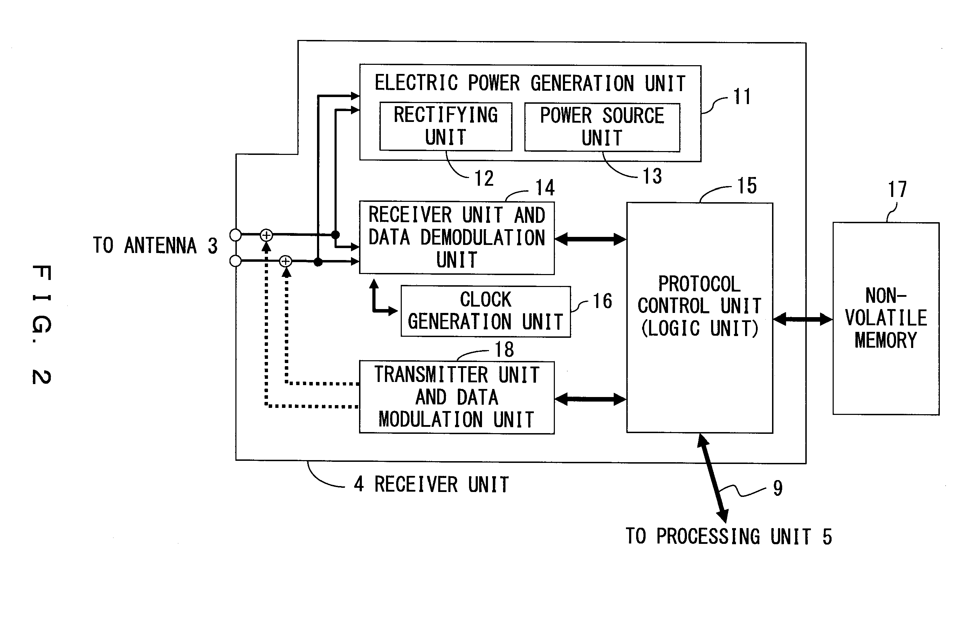

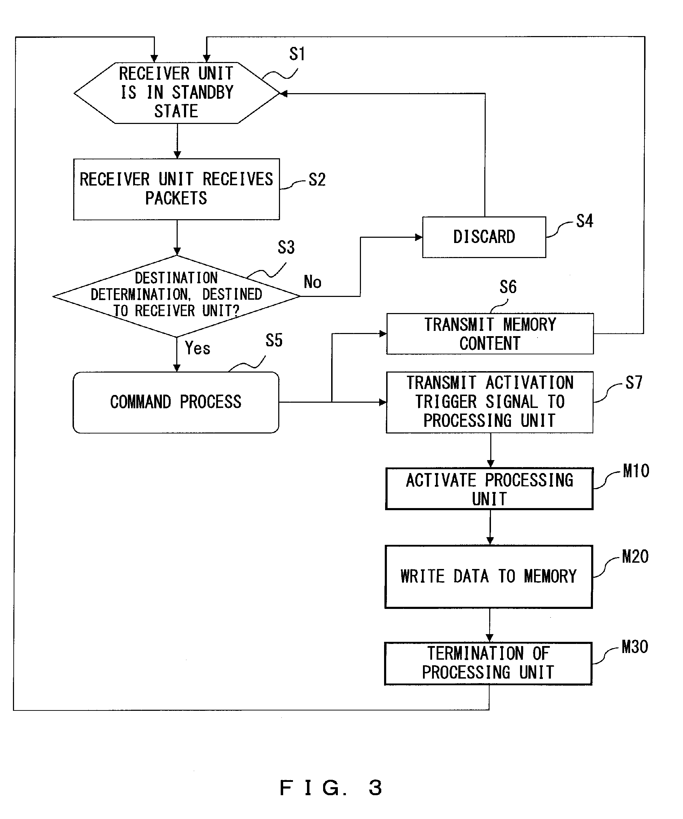

Fig. 2 illustrates an example of an internal configuration of a receiver unit 4 and memory 7 in the wireless communications system illustrated in Fig. 1. Fig. 3 is a flowchart illustrating steps to be executed by the response wireless device illustrated in Fig. 1.
First, the wireless communications system in Fig. 1 includes a query wireless device 1 and includes a response wireless device 2 serving as a response wireless device that implements the present invention. The query wireless device 1 requests the response wireless device 2 to perform a process, and obtains a result of the process from the response wireless device 2. The response wireless device 2 performs the process responding to the request from the query wireless device 1, and transmits a result of the process to the query wireless device 1.

The response wireless device 2 includes an antenna 3, the receiver unit 4, a processing unit 5, a power source unit 6, and the memory 7. The receiver unit 4 is, for example, a transceiver unit that can also transmit radio signals.

The antenna 3 in the response wireless device 2 transmits a radio signal 8 that is an electromagnetic wave transmitted from a query wireless station, or transmits the radio signal 8 modulated by the receiver unit 4 to the receiver unit 4 by radiating the signal to the atmosphere.

The receiver unit 4 in the response wireless device 2 demodulates the radio signal 8 received by the antenna 3 so as to restore the information, and generates, in accordance with this information, a trigger signal 9 that activates the power source unit 6 for supplying power to the processing unit 5.

Also, the receiver unit 4 modulates processed data 10 that was transmitted from the processing unit 5 and stored in the memory 7, and sends the modulated data 10 to the antenna 3.
The processing unit 5 in the response wireless device 2 receives an instruction from the receiver unit 4, and performs processes such as calculations, measurements, information monitoring, and the like, and thereafter writes to the memory 7 the data 10 as a processing result.

The power source unit 6 in the response wireless device 2 is made to enter an on state by the trigger signal 9 generated by the receiver unit 4, and supplies power needed by the processing unit 5.
The memory 7 in the response wireless device 2 stores the data 10 as a result of processing by the processing unit 5 so that the data 10 can be read by the receiver unit 4.

In this configuration, the processing unit 5 needs the power source unit 6 when it collects data; however, no power is consumed when the data is transmitted, decreasing power consumption.

Also, the receiver unit 4 does not need a power source unit, and this realizes a further decrease in power consumption.
Further, this configuration can make the power source unit 6 enter an on state only when the processing unit 5 has to be activated, leaving the power source unit 6 in an off state when the data 10 stored in the memory 7 is read. This realizes a further decrease in power consumption in a response wireless device.

Next, an internal configuration of the receiver unit 4 will be explained by referring to Fig. 2.
In Fig. 2, the radio signal 8 received by the antenna 3 is branched into two signals.
One of the two signals is input to an electric power generation unit 11 so that power for driving the receiver unit 4 can be generated.

The radio signal 8 input to a rectifying unit 12 in the electric power generation unit 11 is rectified, adjusted in voltage by respective power source units 13, and supplied to respective circuits in the receiver unit 4.
The other signal is demodulated by a receiver unit and demodulation unit 14, and is input to a protocol control unit (logic unit) 15. A clock generation unit 16 generates a clock needed by the receiver unit and demodulation unit 14.

The protocol control unit 15 reads the command included in the radio signal 8 (command process), determines the destination of the signal, and responds to requests. "Response to request" referred to herein means writing of data 10 to non-volatile memory 17, reading of the data 10, transmitting of the trigger signal 9 to the processing unit 5, transmitting of data 10 to a transmitter unit and data modulation unit 18 for transmitting the data 10 to the query wireless device 1, and the like. The "non-volatile memory" 17 referred to herein corresponds to the memory 7 in Fig. 1.

Next, steps to be executed by the response wireless device (response wireless device 2) illustrated in Fig. 1 will be explained by referring to the flowchart in Fig. 3.
Steps S1 through S7 are executed by the power source unit 6 in its off state, and steps M10 through 30 are executed by the power source unit 6 in its on state.

In Fig. 3, the receiver unit 4 is in a standby state (step S1), and when the receiver unit 4 receives the radio signal 8 through the antenna 3 in units of packets (step S2), it obtains driving power from the power supplied from the radio signal 8.

Next, the logic unit 15 in the receiver unit 4 extracts destination information included in the radio signal 8 (step S3).
When doing this, the receiver unit 4 discards the radio signal 8 if the destination is not the receiver unit 4 (step S4), and returns to a standby state (step S1). When the destination is the receiver unit 4, the receiver unit 4 performs the above described command process (step S5).

When the command read by this command process specifies transmission of memory content, the receiver unit 4 transmits, through the antenna 3, the data 10 stored in the memory 7 (step S6), and returns to a standby state (step S1).

When the command read by the command process in step S5 specifies activation of the processing unit 5, the receiver unit 4 transmits the trigger signal 9 (step S7), and turns on the power source unit 6 so as to activate the processing unit 5 (step M10).

The activated processing unit 5 stores in the memory 7 the data 10 as a processing result (step M20), turns off the power source unit 6, and terminates operations of itself (step M30). Thereafter, the receiver unit 4 returns to a standby state (step S1).

Thereafter, the response wireless device repeats the above operations.
Also, the processing unit 5 may perform other operations after being activated and before returning the power source unit 6 to an off state.

Construction of a wireless communications system such as that described above makes it possible to confirm the data 10 obtained by the processing unit 5 and stored in the memory 7 while the power source unit 6 is in an off state, decreasing power consumption in the power source unit 6.

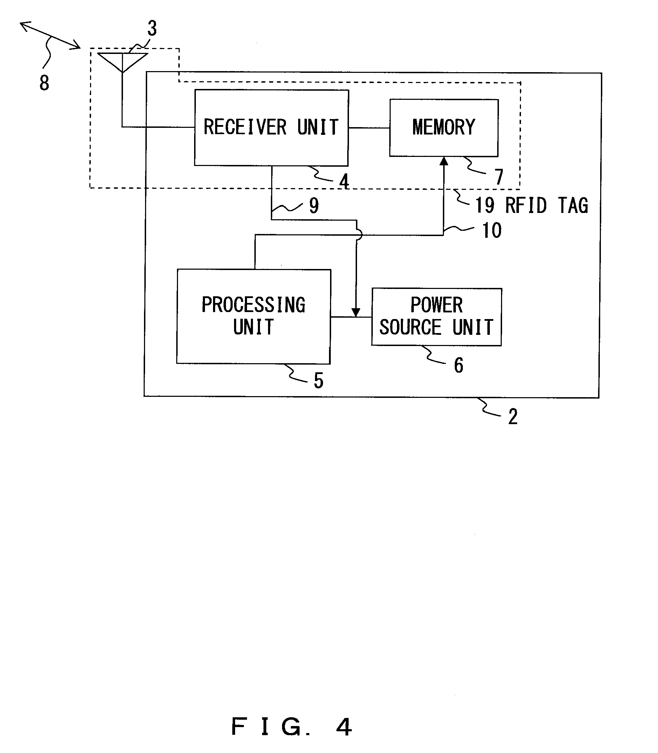

Fig. 4 illustrates a second example of a configuration of a response wireless device that implements the present invention.
In Fig. 4, the response wireless device 2 serving as a response wireless device includes the antenna 3, the receiver unit 4, the processing unit 5, the power source unit 6, and the memory 7.

As described above, a configuration of the response wireless device in Fig. 4 is similar to that of the response wireless device in Fig. 1, but is different in that it has the receiver unit 4 and the memory 7 included in a passive-type wireless tag (RFID tag 19). In this configuration, the receiver unit 4 is a transceiver unit that can also transmit, for example, radio signals.

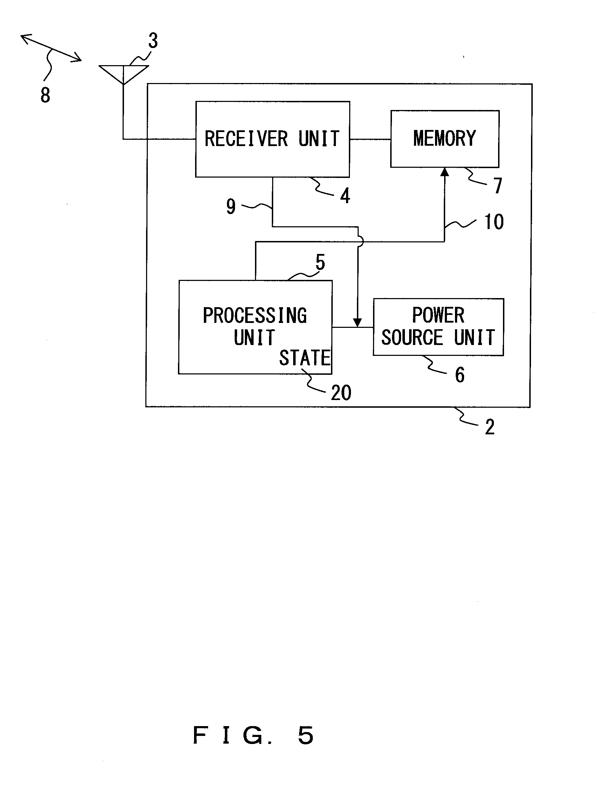

The other device configurations and the steps to be performed are similar to those in Figs. 1 and 3. Additionally, the second configuration in Fig. 4 may be applied to third through seventh configuration examples illustrated in Fig. 5 and the subsequent figures.

A passive-type wireless tag is different from an active-type wireless tag; an active-type wireless tag has a power source and can transmit radio signals by itself, while a passive-type wireless tag cannot transmit radio signals by itself. A passive-type wireless tag activates its circuit by using the principle of electromagnetic induction by radio signals from a query wireless device or by rectifying received radio signals (radio waves) so as to transmit radio signals for exchanging information when it has that power. As an example of electromagnetic induction type, train-fare cards (such as Suica (registered trademark)), by holding which at automatic ticket gates information about train usage can be exchanged and fares can be charged, is well known.
A method of utilizing radio waves can be a passive tag of a UHF (Ultra High Frequency) band.

Construction of a response wireless device such as that described above makes it possible to apply a response wireless device according to the present invention to fields in which RFID tags have already been put to practical use.
Fig. 5 illustrates a third example of a configuration of a response wireless device that implements the present invention.

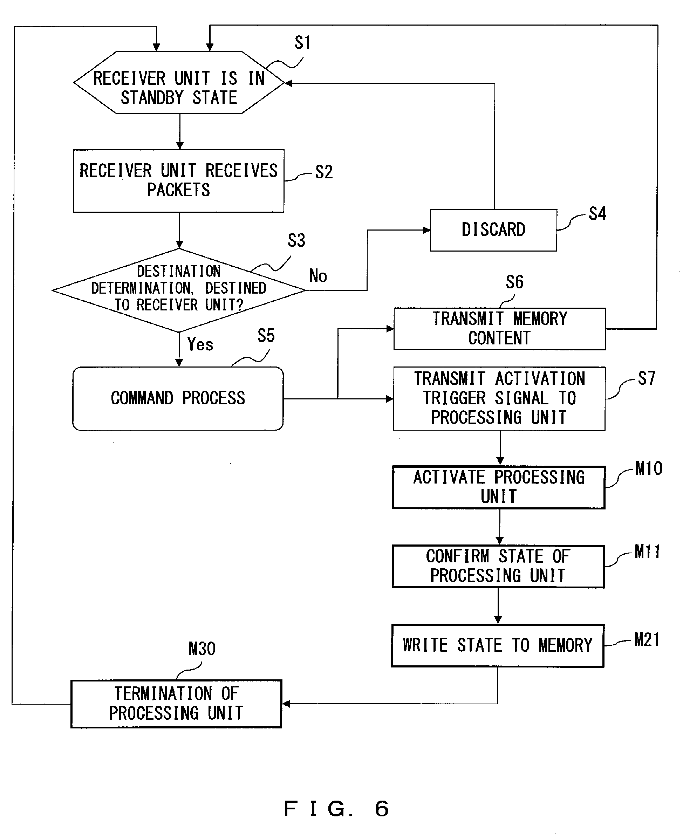

Fig. 6 is a flowchart illustrating steps to be executed by the response wireless device illustrated in Fig. 5.
In Fig. 5, the response wireless device 2 serving as a response wireless device includes the antenna 3, the receiver unit 4, the processing unit 5, the power source unit 6, and the memory 7. As described above, the configuration of the response wireless device in Fig. 5 is similar to that in Fig. 1, but is different in that it has the data 10 representing a state 20 of the processing unit. In this configuration, the receiver unit 4 is a transceiver unit that can also transmit, for example, radio signals.

The state 20 referred to herein can mean any type of state of the response wireless device 2, including an on state and an off state of the processing unit 5, a cumulative time period of using the processing unit 5, a remaining power in the power source unit 6, a cumulative number of times of using the processing unit 5, a time point at which the processing unit 5 was activated by the trigger signal 9, a time point at which the state 20 of the processing unit was obtained, or the like.

Next, steps executed by the response wireless device in Fig. 5 will be explained by referring to the flowchart in Fig. 6.
Steps S1 through S7 are executed by the power source unit 6 in its off state, and steps M10 through 30 are executed by the power source unit 6 in its on state.

Steps S1 through M10 in Fig. 5 are the same as those in Fig. 3.
The processing unit 5 activated in step M10 obtains the state 20 of the processing unit (step M11), and stores in the memory 7 the state 20 as the data 10 (step M21). Thereafter, the processing unit 5 turns off the power source unit 6, and terminates operations of itself (step M30). Thereafter, the receiver unit 4 returns to a standby state (step S1).

Thereafter, the response wireless device repeats the above operations.
Construction of a response wireless device such as that described above makes it possible to confirm the state 20 of the processing unit (such as whether the processing unit 5 is in an on state or an off state), a cumulative use time period of the processing unit 5, and a remaining power in the power source unit 6, even when the power source unit 6 is in an off state because the data 10 obtained by the processing unit 5 and stored in the memory 7 represents the state 20 of the processing unit.

This makes it possible to confirm the state 20 of the processing unit without consuming power in the power source unit 6, and thus to decrease power consumption.
This also makes it possible to confirm an operation state of the processing unit 5 and the remaining power in the power source unit 6 that are stored in the memory, to estimate when to change the battery, to find problems early, to diagnose and fix problems in the processing unit 5 easily, to attain a higher efficiency in maintenance, and to save power.

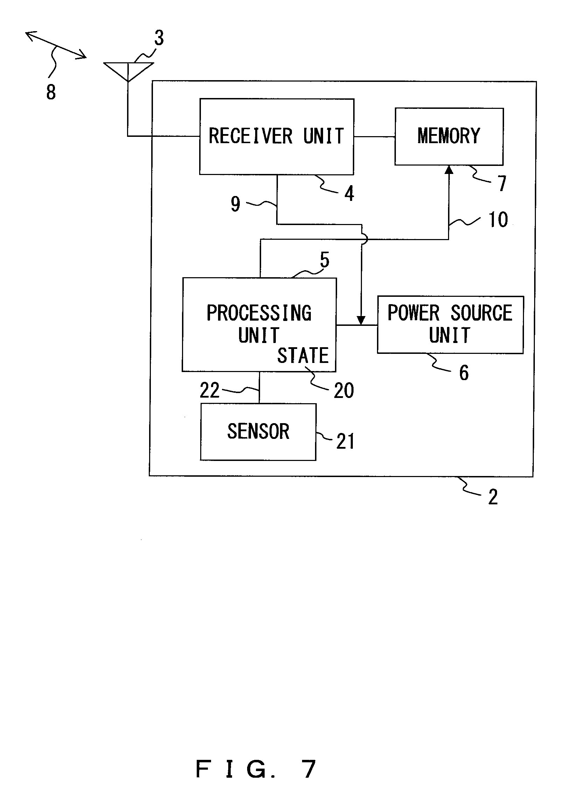

Fig. 7 illustrates a fourth example of a configuration of a response wireless device that implements the present invention.

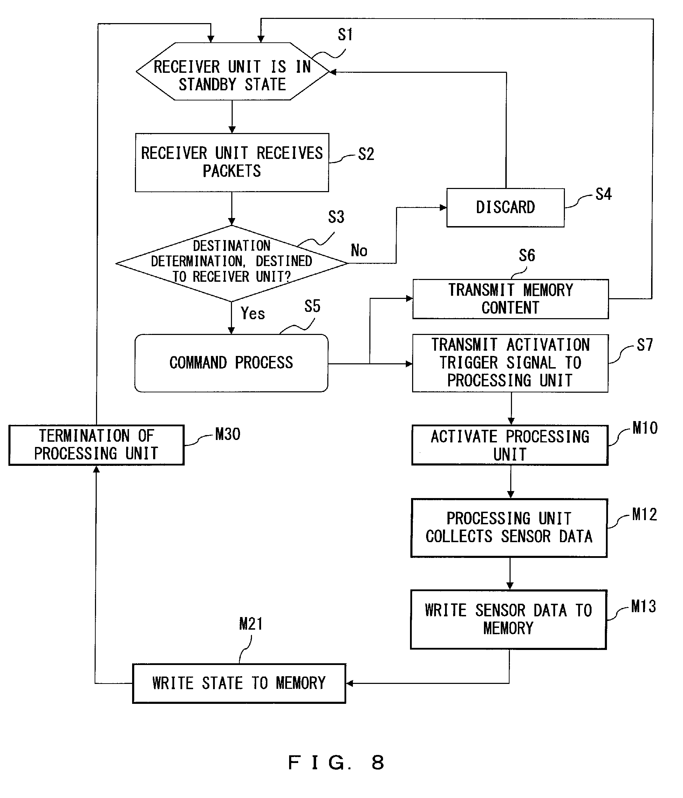

Fig. 8 is a flowchart illustrating steps to be executed by the response wireless device illustrated in Fig. 7.
In Fig. 7, the response wireless device 2 serving as a response wireless device includes the antenna 3, the receiver unit 4, the processing unit 5, the power source unit 6, the memory 7, and a sensor 21. As has been described above, the configuration of the response wireless device illustrated in Fig. 7 is similar to that of the response wireless device illustrated in Fig. 5, but is different in that it has the sensor 21 connected to the processing unit 5. In this configuration, the receiver unit 4 is a transceiver unit that can also transmit, for example, radio signals.

The sensor 21 is connected to the processing unit 5, and detects the external environment when the processing unit 5 operates in response to an instruction from the receiver unit 4, and outputs to the processing unit the detected information as sensor data 22. The sensor 21 can be any type of sensor that detects various states of the surrounding environment such as temperature, humidity, pH, vibration, electric field, magnetic field, potential difference, wind speed, cosmic rays, ions, smell, chemical substances, radiation, sound, pressure, and the like.

In this configuration, the state 20 of the processing unit can represent any state of the sensor 21 such as a state of the sensor 21, the number of times of using the sensor 21, and the like.
Next, steps executed by the response wireless device in Fig. 7 will be explained by referring to the flowchart in Fig. 8.

Steps S1 through S7 are executed by the power source unit 6 in its off state, and steps M10 through 30 are executed by the power source unit 6 in its on state.
Steps S1 through M10 in Fig. 8 are similar to those in Fig. 3.

The processing unit 5 activated in step M10 obtains the sensor data 22 using the sensor 21 (step M12), and stores, in the memory 7, the obtained data as the data 10 (step M13), obtains the state 20 of the processing unit, stores, in the memory 7, the obtained state 20 as the data 10 (step M21), returns the power source unit 6 to an off state and terminates operations of itself (step M30). Thereafter, the receiver unit 4 returns to a standby state (step S1).

Thereafter, the response wireless device repeats the above operations.
Construction of a response wireless device such as that described above enables the processing unit 5 to collect data representing the state of the surrounding environment by using the sensor 21.

It is also possible to confirm, even when the power source unit 6 is in an off state, the data 10 obtained by the processing unit 5 using the sensor 21 and stored in the memory 7.

This makes it possible to confirm the state 20 of the processing unit and the data 10 obtained by the sensor 21 without consuming power in the power source unit 6, and thereby to decrease the power consumption.
This also makes it possible to confirm information stored in the memory 7 such as an operation state of the processing unit 5, the remaining power in the power source unit 6, and the state 20 of the processing unit including a state of the sensor 21 such as the number of times of using the sensor 21 and a state of the sensor 21, even when the power source unit 6 is in an off state. This realizes a further decrease in power consumption. Also, it is easier to diagnose and fix problems in the processing unit 5 including the sensor 21, to estimate when to change the battery, and to find problems early, so that maintenance can be conducted more efficiently consuming less power.

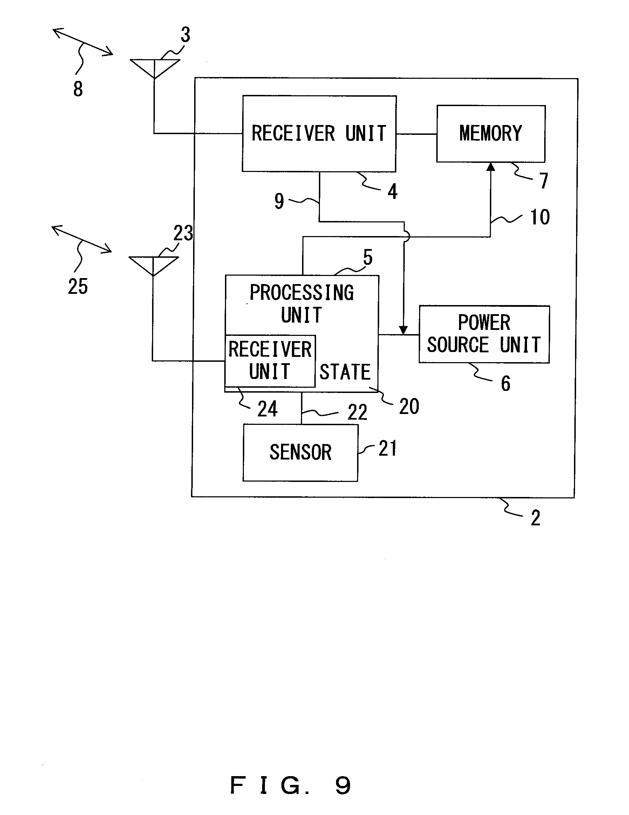

Fig. 9 illustrates a fifth example of a configuration of a response wireless device that implements the present invention.

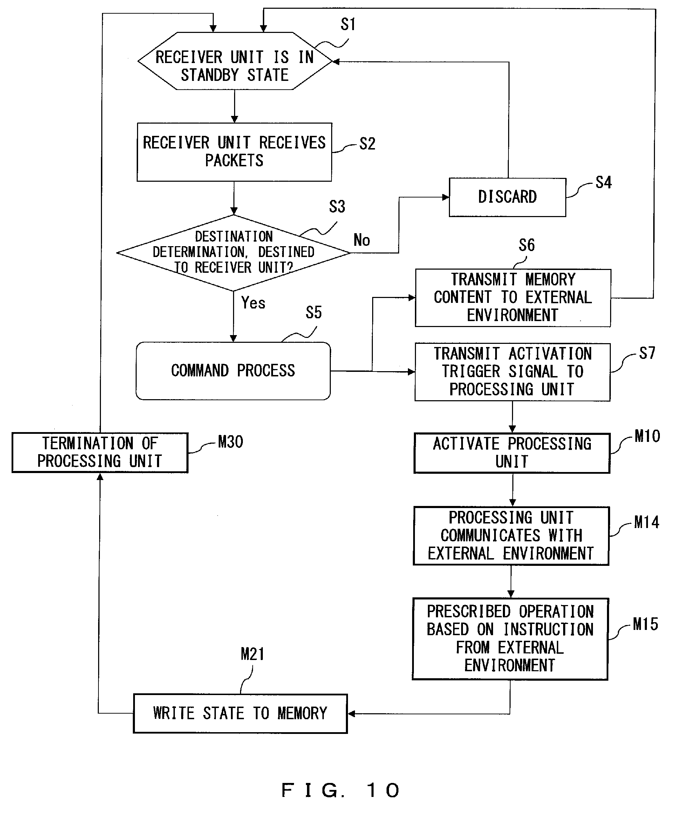

Fig. 10 is a flowchart illustrating steps to be executed by the response wireless device illustrated in Fig. 9.
In Fig. 9, the response wireless device 2 serving as a response wireless device includes the antenna 3, the receiver unit 4, the processing unit 5, the power source unit 6, the memory 7, the sensor 21, and an antenna 23. In this configuration, the receiver unit 4 is a transceiver unit that can also transmit, for example, radio signals.

As described above, the configuration of the response wireless device illustrated in Fig. 9 is similar to that of the response wireless device illustrated in Fig. 7, but is different
in that the processing unit in the response wireless device in Fig. 9 can perform wireless communications using the antenna 23 and a receiver unit 24. In this configuration, the receiver unit 24 is a transceiver unit that can also transmit, for example, radio signals.

The processing unit 5 is supplied with power from the power source unit 6 in response to an instruction from the receiver unit 4, performs processes such as calculations, measurements, information monitoring, and the like, and thereafter writes to the memory 7 the state 20 of the processing unit and the sensor data 22 as the data 10.

Also, the processing unit 5 uses the receiver unit 24 for modulating the sensor data 22 obtained through the sensor 21, and sends the resultant data to the antenna 23. After the processing unit has received a power supply from the power source unit 6, it can perform communications with the query wireless device 1 without any limitations.

The antenna 23 sends, to the processing unit 5 set for demodulation, a radio signal 25 that is an electromagnetic wave transmitted from the query wireless device 1, or radiates to the atmosphere the radio signal 25 modulated by the processing unit 5 so as to transmit the radio signal 25 to the query wireless device 1.

Next, steps to be executed by the response wireless device in Fig. 9 will be explained by referring to the flowchart in Fig. 10.
Steps 1 through S7 are executed by the power source unit 6 in its off state, and steps M10 through M30 are executed by the power source unit 6 in its on state.

Steps S1 through M10 are similar to those in Fig. 3.
The processing unit 5 that has been activated in step M10 starts communications with the external environment by exchanging the radio signal 25 through the antenna 23 (step M14), obtains the sensor data 22 and the state 20 of the processing unit in response to a request from the external environment, and transmits the obtained information through the antenna 23 (step M15).

When receiving a termination instruction from the external environment or when receiving no radio signal 25 for a particular period of time, the processing unit 5 obtains the state 20 of the processing unit, stores the state 20 in the memory 7 as the data 10 (step M21), and returns the power source unit to an off state (step M30). Thereafter, the receiver unit 4 returns to a standby state (step S1).

Thereafter, the response wireless device repeats the above operations.
In this configuration, it is also possible for the state 20 of the processing unit to represent the cumulative number of times of conducting communications with a query wireless device through the antenna 23.

Construction of a response wireless device such as that described above enables the processing unit 5 to conduct wireless communications with the external environment by itself if it receives power from the receiver unit 4 through the receiver unit 4, and thereby data exchange and process control are facilitated.

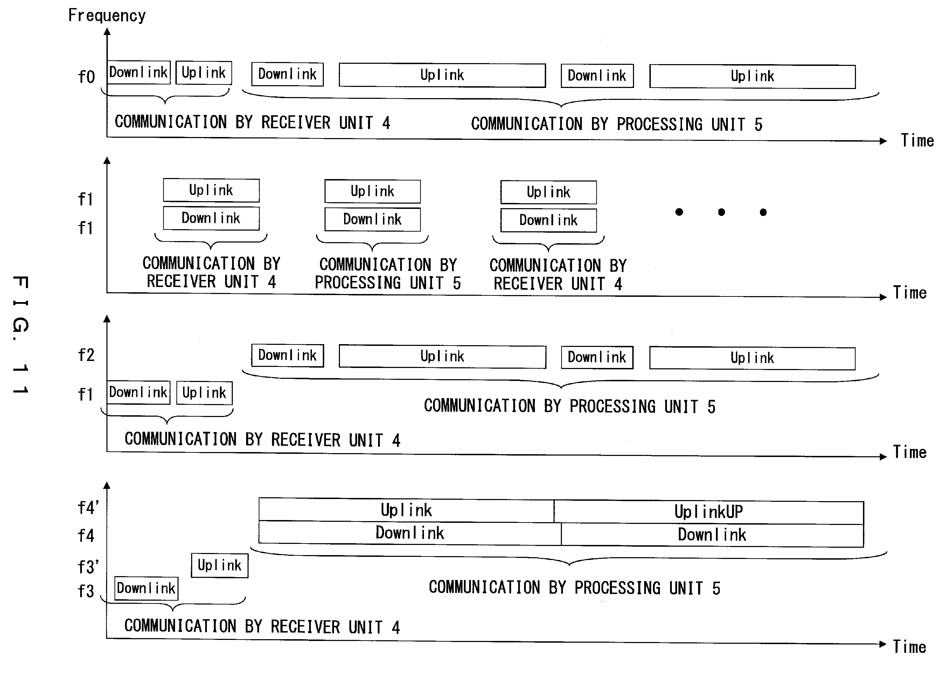

Fig. 11 illustrates an example of a wireless communications method according to the fourth embodiment. The vertical axes represent the frequencies, and the horizontal axes represent the elapsed time.
The first view from the top in Fig. 11 illustrates a wireless communications method in which the radio signal 8 of the receiver unit 4 and the radio signal 25 of the processing unit 5 are of the same frequency and the method is a TDD method.

When a TDD method is used as a communications method as described above, a frequency band can be used efficiently.
The second view from the top in Fig. 11 illustrates a wireless communications method in which the radio signal 8 of the receiver unit 4 and the radio signal 25 of the processing unit 5 are of the same frequency, data is received or transmitted using a TDD method, and the data is multiplexed by TDMA (Time Division Multiple Access).

TDMA is a wireless communications technique by which one frequency is alternately used by plural transceivers respectively for short time periods, and is used for wireless communications of, for example, a mobile phone. When multiplexing is based on TDMA, utilizing a TDD method as a communications method as described above, a frequency band can be used effectively.

The third view from the top in Fig. 11 illustrates a wireless communications method used when a TDD method is used and the radio signal 8 of the receiver unit 4 and the radio signal 25 of the processing unit 5 are of different frequencies.
Because the receiver unit 4 does not have a power source unit, the transmission power is low. This makes it necessary to select, as f1, a low frequency, which causes a smaller propagation loss, in order to perform communications for a long distance. By contrast, the processing unit 5 has a power source unit, and thus it can perform long-distance communications even when it selects f2, which is a frequency higher than f1. In this configuration, the receiver unit 4 and the processing unit 5 may select f1 and f2, respectively, so that they can perform communications for an equal distance.

TDD referred to herein is an abbreviation for Time Division Duplex. TDD is a method based on duplex communication used mainly in the fields of wireless communications and mobile communications, and is
1186379586406_1
1186379586406_2
which makes it possible to perform bi-directional communications using one
1186379586406_0
band while switching transmission and reception in units of time periods. Because transmission and reception are not performed at the same time in TDD-based communications, there are no interferences between transmitted signals and received signals, and transmission power can easily be controlled by adopting different speeds for transmission and reception so that transmission and reception are asymmetric.

When a TDD method is used as a communications method as described above, transmission and reception cannot be conducted at the same time, causing no interferences between signals being transmitted and received. Also, different speeds can be adopted for transmission and reception so that transmission and reception are asymmetric and transmission power can easily be controlled.

The fourth view form the top in Fig. 11 illustrates a wireless communications method used when the radio signal 8 of the receiver unit 4 and the radio signal 25 of the processing unit 5 are of different frequencies and the processing unit 5 conducts transmission and reception at the same time.
FDD stated herein is an abbreviation for Frequency Division Duplex. FDD is one of methods for duplex communications used mainly in fields of wireless communications and mobile communications, and is
1186379586406_4
1186379586406_5
that assigns different
1186379586406_3
to transmission and reception so as to conduct full-duplex communications. FDD is slightly inferior to TDD in frequency band use efficiency for asymmetric traffic like data transmission, but does not need to synchronize transmission and reception.

When the FDD method is used as a communications method as described above, transmission and reception can be conducted at the same time. Also, transmission and reception do not need to be synchronized, decreasing power consumed for communications.

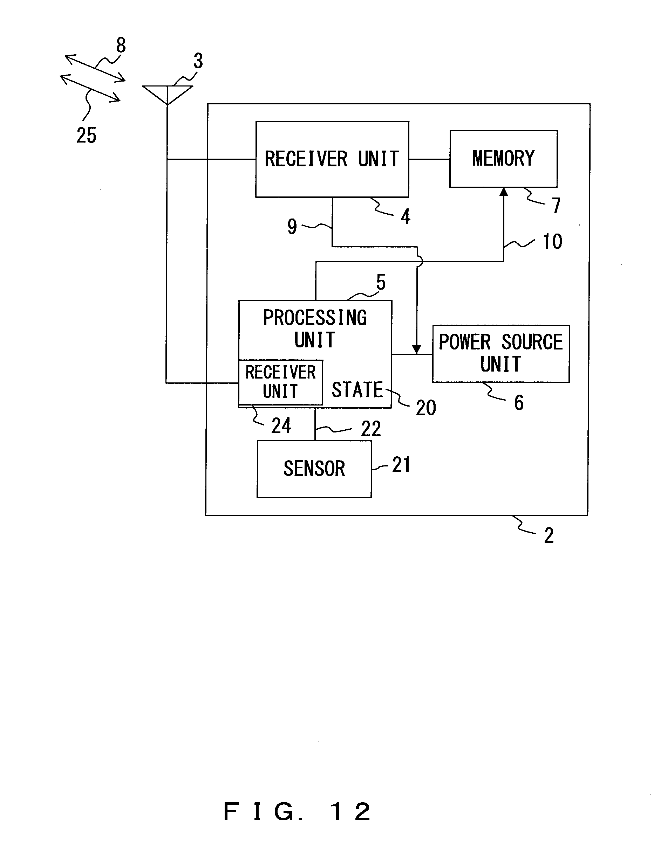

Fig. 12 illustrates a sixth example of a configuration of a response wireless device that implements the present invention.
In Fig. 12, the response wireless device 2 serving as a response wireless device includes the antenna 3, the receiver unit 4, the processing unit 5, the power source unit 6, the memory 7, and the sensor 21. The configuration of the response wireless device in Fig. 12 is similar to that in Fig. 9, but is different in that the antenna 3 of the receiver unit 4 and the antenna 23 of the processing unit 5 in Fig. 9 are shared in Fig. 12. The other device configurations and the steps to be executed are similar to those in Figs. 9 and 10. In this configuration, the receiver unit 4 is a transceiver unit that can also transmit, for example, radio signals. Also, the receiver unit 24 in the processing unit 5 is a transceiver unit that can also transmit, for example, radio signals.

Construction of a response wireless device such as that described above makes it possible to produce a response wireless device that is smaller than a response wireless device having antennas respectively for the receiver unit 4 and the processing unit 5, and thus can realize a lower production cost and higher efficiency in design and development. Also, it leads to higher efficiency in maintenance and to a decrease in power consumption.

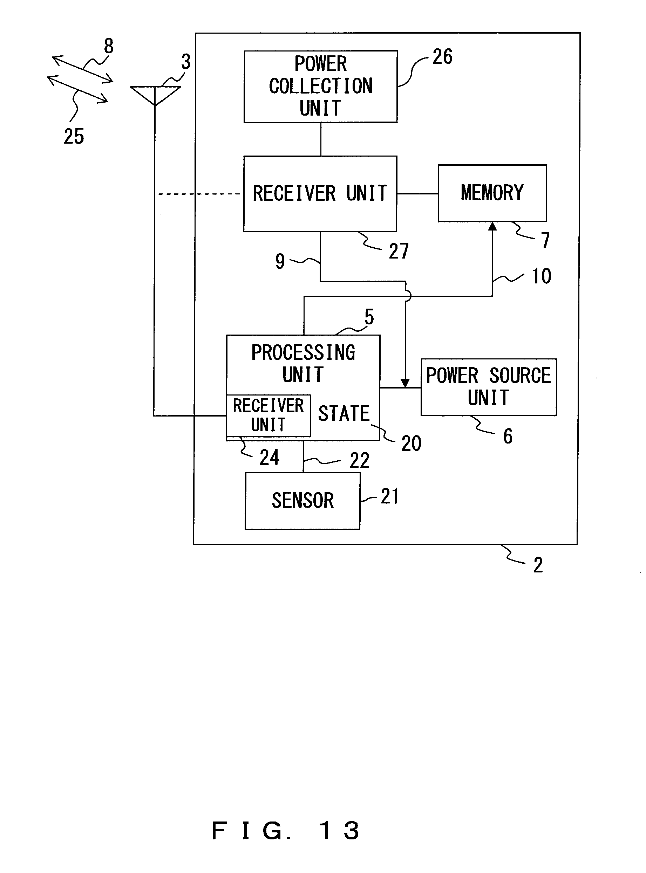

Fig. 13 illustrates a seventh example of a configuration of a response wireless device that implements the present invention.

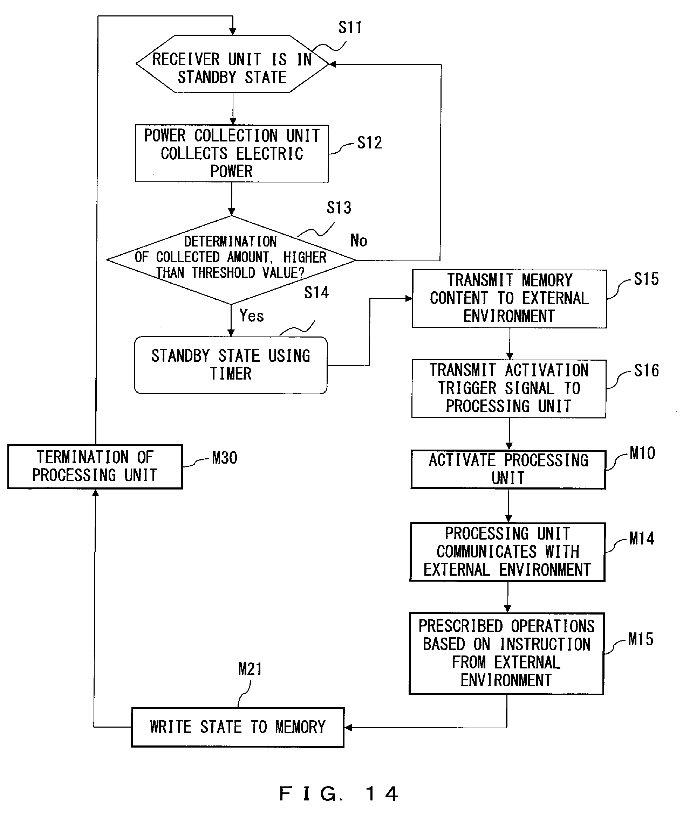

Fig. 14 is a flowchart illustrating steps to be executed by the response wireless device illustrated in Fig. 13.
In Fig. 13, the response wireless device 2 includes the antenna 3, a power collection unit 26, a receiver unit 27, the processing unit 5, the power source unit 6, the memory 7, and the sensor 21. The configuration of the response wireless device in Fig. 13 is similar to that in Fig. 12, but is different
in that it has the power collection unit 26 and the receiver unit 27 instead of the receiver unit 4. The receiver unit 27 is a transceiver unit that can also transmit, for example, radio signals.

The power collection unit 26 converts, into electric power, energy around the receiver unit 27, as represented by vibrations, heat, sunlight, microwaves, etc., and collects and accumulates the power in a capacitor or a battery.

The receiver unit 27 determines whether or not the amount of the accumulated power collected by the power collection unit 26 is greater than a threshold value, and modulates the data stored in the memory 7 to send the modulated data to the antenna 3 when the amount is greater. The receiver unit 27 also generates a trigger signal 9 for activating the power source unit 6 set for providing power to the processing unit 5.

It is also possible to employ a configuration in which the receiver unit 27 obtains driving power from the radio signal 8.
Steps to be executed by the response wireless device in Fig. 13 will be explained by referring to the flowchart in Fig. 14.

Steps S11 through S16 are executed by the power source unit 6 in its off state, and steps M10 through 30 are executed by the power source unit 6 in its on state.
In Fig. 13, the receiver unit 27 is first in a standby state (step s11). The power collection unit 26 converts, into electric power, energy around the receiver unit 27, and collects and accumulates the power in a capacitor or a battery (step S12) . The receiver unit 27 determines whether or not the amount of the power collected and accumulated by the power collection unit 26 is greater than a threshold value (step S13). When the amount is not greater than the threshold value, the receiver unit 27 returns to a standby state (step S11). When the amount is greater than the threshold value, the power collection unit 26 transmits data stored in the memory 7 (step S15) after a prescribed time preset in a timer has elapsed (step s14). Thereafter, the power collection unit 26 transmits the trigger signal 9 to the processing unit 5 (step S16).

The activated processing unit 5 (step M10) starts communications with the external environment (step M14) by exchanging the radio signal 25 through the antenna 3, obtains sensor data 22 and the state 20 of the processing unit, and transmits them through the antenna 3 (step M15) in response to a request from the external environment. Thereafter, when receiving a termination instruction from the external environment or when not receiving the radio signal 25 for a prescribed term, the processing unit 5 obtains the state 20 of the processing unit, stores the state 20 in the memory 7 as the data 10 (step M21), returns the power source unit 6 to an off state, and terminates operations of itself (step M30). Thereafter, the receiver unit 27 returns to a standby state (step S11).

Thereafter, the response wireless device repeats the above operations.
Construction of a response wireless device such as that described above makes it possible to detect variations in the surrounding environment so as to activate the processing unit 5 when such variations in the surrounding environment such as pillars, high-rise buildings, expressways, or the like have exceeded a threshold value. Thereby, monitoring can be automated, and higher efficiency in sensing and a decrease in power consumption can be realized. Also, a response wireless device is activated when sensing is necessary, and accordingly a further decrease in power consumption can be achieved.

As described above, according to the present invention, power consumption in a response wireless device can be decreased. Also, the state 20 of the processing unit can be recognized while the power source unit 6 is in an off state, and thereby maintenance is facilitated.

Also, the present invention is expected to be applied to a wireless personal area network (PAN) and to a sensor network technology that has a feature of low speed communications based on a combination of a PAN and a sensor, such as the ZigBee standard.

The ZigBee standard is a technology for wireless communications between devices in an area of several tens of meters in radius (personal area), and has the features wherein waves are transmitted for a long distance and data can be collected from many sensors set over a wide area. The most representative usage of this standard is a sensor network for automating control of buildings and factories. This standard is used for periodically collecting data from sensors detecting humans and temperature sensors set in various spots.

Also, the present invention can be applied to a measurement/maintenance system set in places in which targets have to be measured aperiodically and direct diagnosis is difficult, such as in buildings, pillars, expressways, communications satellites, or the like. Application of the present invention is effective for cases where construction materials have to be sensed when variations in surrounding environments, for example, in pillars, high-rise buildings, expressways, or the like have exceeded a threshold value.

The present invention is also expected to be applied to communications using mobile phones.

## Claims

1. A response wireless device, comprising:
memory for storing data;
a processing unit for collecting various data and storing the data in the memory;
a power source unit for supplying electric power needed by the processing unit for collecting the data and storing the data in the memory; and
a receiver unit for receiving at least a radio signal, wherein:
the receiver unit controls the power source unit so as to make the power source unit supply the electric power to the processing unit when a received radio signal includes a first signal, and the processing unit stops the power source unit from supplying electric power after collecting the data and storing the data in the memory.

2. The response wireless device according to claim 1, wherein:
the receiver unit generates, on the basis of the first signal, a trigger signal for activating the power source unit.

3. The response wireless device according to claim 1 or 2, wherein:
the receiver unit is a transceiver unit that can also transmit a radio signal, and reads data stored in the memory to transmit the data as a radio signal when the received radio signal includes a second signal.

4. The response wireless device according to one of claims 1 through 3, wherein:
the receiver unit and the memory constitute a passive-type wireless tag.

5. The response wireless device according to one of claims 1 through 4, wherein:
the data represents a state of the processing unit.

6. The response wireless device according to one of claims 1 through 5, wherein:
the processing unit includes a sensor for measuring an external environment, and the data is obtained by the sensor.

7. The response wireless device according to one of claims 1 through 6, wherein:
the receiver unit receives or transmits a first radio signal through a first radio transmission path, and the processing unit receives or transmits a second transmission signal through a second radio transmission path.

8. The response wireless device according claim 7, wherein:
the receiver unit and the processing unit conduct reception or transmission using a TDD (Time Division Duplex) method.

9. The response wireless device according claim 7, wherein:
the receiver unit and the processing unit respectively conduct reception or transmission using a TDD (Time Division Duplex) method in the same frequency channels, and multiplexing is performed on the basis of Time Division Multiple Access (TDMA).

10. The response wireless device according claim 7, wherein:
the first radio transmission path and the second radio transmission path are different frequency channels; and
the receiver unit and the processing unit conduct reception or transmission using a TDD (Time Division Duplex) method.

11. The response wireless device according claim 7, wherein:
the first radio transmission path and the second radio transmission path are different frequency channels; and
the receiver unit and the processing unit conduct reception or transmission using an FDD (Frequency Division Duplex) method.

12. The response wireless device according to one of claims 7 through 11, wherein:
the receiver unit has an antenna that conducts reception or transmission of the first radio signal; and
the antenna also conducts reception or transmission of the second radio signal for the processing unit.

13. The response wireless device according one of claims 1 through 12, comprising:
a power collection unit for collecting energy around the power collection unit so as to convert the energy into electric power, wherein:
the receiver unit is driven by the collected electric power.
